# EUROPÄISCHE PATENTSCHRIFT

(11) **EP 2 580 495 B1**
(45) Veröffentlichungstag und Bekanntmachung des Hinweises auf die Patenterteilung: **09.08.2017**
(21) Anmeldenummer: 11724398.0
(22) Anmeldetag: 30.05.2011
(51) Int. Cl.: F16H 61/30

(54) **AXIALE VERSCHIEBEVORRICHTUNG FÜR EIN FAHRZEUGGETRIEBE**
AXIAL DISPLACEMENT DEVICE FOR A VEHICLE TRANSMISSION
DISPOSITIF DE DÉPLACEMENT AXIAL POUR UNE BOÎTE DE VITESSES DE VÉHICULE

(30) Priorität: 09.06.2010 DE 102010023144
(43) Veröffentlichungstag der Anmeldung: 17.04.2013
(73) Patentinhaber: KNORR-BREMSE Systeme für Nutzfahrzeuge GmbH, 80809 München (DE)
(72) Erfinder: SEIDL, Tomas, 273 51 Pleteny ujezd (CZ)
(74) Vertreter: Schönmann, Kurt
(86) Internationale Anmeldenummer: PCT/EP2011/058857
(87) Internationale Veröffentlichungsnummer: WO 2011/154274

(56) Entgegenhaltungen:
- DE-A1- 3 214 776
- DE-A1-102008 000 072
- DE-A1-102009 014 502
- JP-U- H0 339 654
- JP-U- 61 154 302

## Beschreibung

Die Erfindung betrifft eine Vorrichtung zum axialen Verschieben einer Welle in einem Fahrzeuggetriebe, insbesondere einem Fahrzeuggetriebe eines Nutzfahrzeugs, siehe zum Beispiel die DE-A-10 2009 014502. Die vorliegende Offenbarung befasst sich mit einer Vorrichtung zur Erzeugung einer Kraft parallel zu einer im Inneren eines Getriebes angeordneten Welle und der Übertragung der erzeugten Kraft auf die Welle. Bei der Welle kann es sich beispielsweise um eine Synchronizerwelle handeln, die in einem Fahrzeuggetriebe angeordnet sein kann und die beim Betrieb des Getriebes parallel zur ihrer Achse verschoben werden muss. Aufgrund der notwenigen Lagerung und Schmierung der Synchronizerwelle und dem eingeschränkte Einbauraum ist eine direkte Anbindung der Synchronizerwelle an einen die Welle in der axialen Richtung verschiebenden Kolben nicht möglich, da dann der notwendige Kolbenhub nicht erreicht werden könnte.

Der vorliegenden Erfindung liegt die Aufgabe zugrunde, eine Vorrichtung bereitzustellen, die die für den Betrieb des Getriebes notwendigen Kräfte auf die Welle in der axialen Richtung ohne direkte Anbindung an die Welle erzeugen kann.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung besteht aus einer Vorrichtung zum axialen Verschieben einer Welle in einem Fahrzeuggetriebe, insbesondere einem Fahrzeuggetriebe eines Nutzfahrzeugs, bei dem über eine Gabel Kräfte in einer axialen Richtung auf die Welle des Fahrzeuggetriebes ausgeübt werden, wobei die Vorrichtung einen in der axialen Richtung beweglichen Kolben in einem Kolbengehäuse umfasst, wobei der Kolben auf einer inneren Führung gelagert ist, und wobei ein Ende der inneren Führung auf einer Seite aus dem Kolbengehäuse hinausragt und dort direkt mit dem Getriebegehäuse des Fahrzeuggetriebes verbunden und gegenüber diesem festgelegt ist. Über die Gabel kann der Kolben in einfacher Weise an die Welle angebunden werden, wobei mit Hilfe dieser Konstruktion ein beliebiger Kolbenhub aufgrund des Achsenversatzes zwischen der Welle und dem Kolben realisierbar ist. Um die über die Gabel aufgrund des Achsenversatzes übertragenen Querkräfte senkrecht zu der axialen Richtung auf den Kolben aufzunehmen, ist die innere Führung vorgesehen, die an einer Seite über das Kolbengehäuse hinausragt und dort zur Ableitung der ist. Querkräfte mit dem Gehäuse des Getriebes verbunden ist. Dabei kann vorgesehen sein, dass der Kolben einen im Inneren des Kolbengehäuses vorgesehenen Druckraum in einen ersten Bereich und einen zweiten Bereich unterteilt. Dies erlaubt eine druckinduzierte Verschiebung des Kolbens in positive und negative axiale Richtung, wobei durch die beiden getrennten Bereiche sowohl eine positive als auch eine negative Kraft in der axialen Richtung auf die Welle ausgeübt werden kann.

Weiterhin kann vorgesehen sein, dass an der inneren Führung ein Nutring zur Abdichtung des Druckraumes vorgesehen ist. Dies erlaubt den eventuell durch die Kolbenbewegung entstandenen Abrieb vom Inneren des Getriebes zu separieren.

Es kann auch vorgesehen sein, dass ein weiteres Ende der inneren Führung auf einer weiteren Seite des Kolbengehäuses über das Kolbengehäuse hinausragt, und dass eine Abstützung vorgesehen ist, die das weitere Ende aufnimmt und gegenüber dem Gehäuse des Fahrzeuggetriebes festlegt. Durch die Abstützung wird die Durchbiegung der inneren Führung unter Querbelastungen reduziert, weshalb eine einfachere Fixierung der inneren Führung auf der gegenüberliegenden Seite möglich wird. Dies hat eine Reduzierung der Teilkosten zur Folge.

Weiterhin kann vorgesehen sein, dass die Abstützung in einer radialen Richtung ein Lagerspiel aufweist.

Insbesondere kann vorgesehen sein, dass die innere Führung gegenüber der Abstützung eine Abstufung aufweist. Auf diese Weise können auf die innere Führung einwirkende axiale Kräfte in das Gehäuse des Getriebes abgeleitet werden.

Es kann auch vorgesehen sein, dass die innere Führung als eine zentrale Führung ausgeführt ist. Auf diese Weise können an den Berührpunkten zwischen Kolben und Kolbengehäuse wirkenden Kräfte gleichmäßig verteilt werden.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform einer axialen Verschiebevorrichtung;
- Figur 2: eine zweite Ausführungsform einer axialen Verschiebevorrichtung; und
- Figur 3: eine dritte Ausführungsform einer axialen Verschiebevorrichtung.

In den folgenden Zeichnungen bezeichnen gleiche Bezugszeichen gleiche oder gleichartige Bauteile.

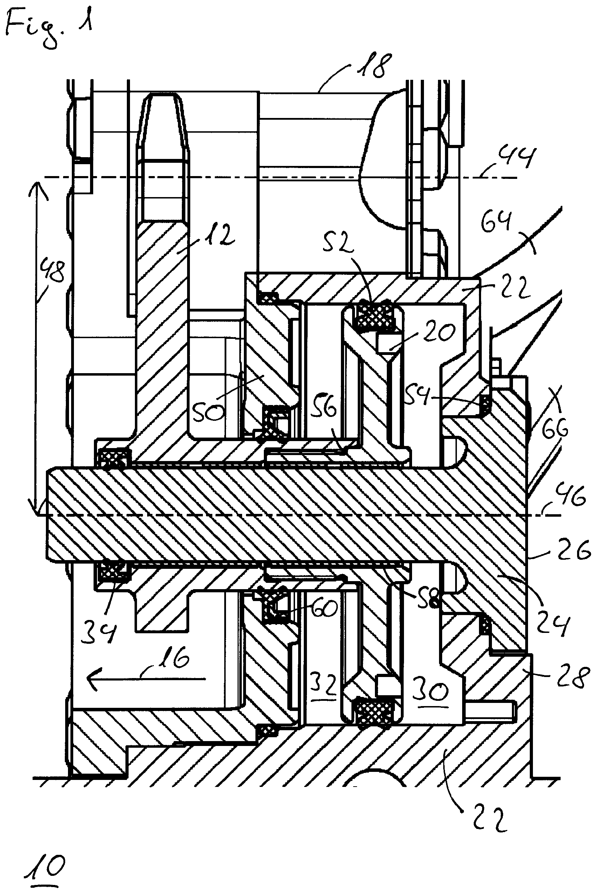

Figur 1 zeigt eine erste Ausführungsform einer axialen Verschiebevorrichtung. Die dargestellte Vorrichtung 10 umfasst einen Kolben 20, der im Inneren eines Kolbengehäuses 22, welches von einem Deckel 50 verschlossen ist, in einer axialen Richtung 16 auf einer inneren Führung 24, die beispielsweise zentral ausgeführt sein kann, verschiebbar angeordnet ist. Das Kolbengehäuse 22 kann beispielsweise als Teil des Gehäuses 28 des Fahrzeuggetriebes ausgeführt sein. Der Kolben 20 kann dabei über eine Verbindung 56 eine Gabel 12 in der axialen Richtung 16 mitbewegen. Die Verbindung 56 zwischen dem Kolben 20 und der Gabel 12 kann eine mit Hilfe eines Klebstoffs gesicherte Gewindeverbindung mit Fassung umfassen, so dass der Kolben 20 zusammen mit der Gabel 12 ein stabiles und robustes Bauteil bildet. Der Kolben 20 unterteilt den im Inneren des Kolbengehäuses 22 vorgesehenen Druckraum in einen ersten Bereich 30 und einen zweiten Bereich 32, wobei ein an dem Kolben 20 angeordneter weiterer Nutring 52 den ersten Bereich 30 gegenüber dem zweiten Bereich 32 abdichtet. Die beiden Bereiche 30, 32 des Druckraumes können über eine Druckluftleitung 64 und eine weitere Druckluftleitung 66 jeweils mit Druck beaufschlagt werden, um über eine axiale Verschiebung des Kolbens 20 eine Kraft auf die Gabel 12 in der axialen Richtung 16 zu erzeugen, mit deren Hilfe eine Welle 18, die beispielsweise eine Synchronizerwelle eines Fahrzeuggetriebes sein kann, zu verschieben. Die Welle 18 weist eine Wellenachse 44 auf, die gegenüber einer Führungsachse 46 der inneren Führung 24 einen Achsenversatz 48 aufweist. Aufgrund des Achsenversatzes 48 entstehen bei der Übertragung der Kraft in der axialen Richtung 16 auf die Welle 18 über die Gabel 12 Querkräfte, die von der inneren Führung 24 aufgenommen und über ein Gehäuse 28 des Getriebes abgeleitet werden. Zu diesem Zweck ragt ein Ende 26 der inneren Führung 24 über das Kolbengehäuse 22 hinaus, wobei das Ende 26 der inneren Führung 24 mit einem Gehäuse 28 des Fahrzeuggetriebes fest verbunden ist. Zwischen der inneren Führung 24 und dem Gehäuse 28 ist dabei ein O-Ring 54 vorgesehen, um den Druckraum im Inneren des Kolbengehäuses 22 nach außen abzudichten.

Ein Nutring 34 und eine Dichtung 60 sind weiterhin zur Abdichtung des Druckraumes in dem Kolbengehäuse 22 gegenüber der Umgebung vorgesehen. Der Kolben 20 und die Gabel 12, die über die Verbindung 56 miteinander gekoppelt sind, sitzen auf zwei Laufbuchsen 58 an der inneren Führung 24, um die axiale Verschiebbarkeit von Kolben 20 und Gabel 12 zu ermöglichen. Es ist auch denkbar, dass die innere Führung 24 mit einem Versatz zu der zentralen Führungsachse 46 angeordnet ist, beispielsweise um die Gabel 12 zu verkürzen. Die beschriebene Vorrichtung 10 kann beispielsweise eine Kraft von bis zu 3,2 kN in der axialen Richtung 16 über die Gabel 12 auf die Welle 18 ausüben. Dabei bleibt die Lagerung und Schmierung der Welle wegen eines Achsenversatzes 48 in üblicher Weise lösbar. Bei einem vorgegebenen Steuerdruck für den Kolben 20 von beispielsweise etwa 8,3 ± 0,2 bar ist zur Erzeugung der geforderten Kraft von bis zu 3,2 kN ein Kolbendurchmesser von zirka 81 mm notwendig, woraus sich ein Achsenversatz 48 von mindestens 65 mm ergibt. Die Gabel 12 kann beispielsweise eine Verstärkungsrippe, beispielsweise eine Versteifungsrippe, aufweisen, wodurch die Durchbiegung der Gabel 12 bei Belastung reduziert wird. Durch den Achsenversatz 48 entstehen an der inneren Führung 24 große Querkräfte, so dass die Laufbuchse 58 ebenfalls entsprechend robust ausgelegt sein muss. Die Gleitführungsbuchsen können dabei beispielsweise aus Stahl bestehen, während die Laufflächen der Buchsen aus einer Kombination aus Teflon und Bronze, die in den Kolben 20 und die Gabel 12 eingepresst sein können und auf den gehärteten und polierten Oberflächen der Gleitführungsbuchsen, die beispielsweise an der inneren Führung 24 angeordnet sein können, laufen. Die innere Führung 24 kann beispielsweise mit einem Schmiedeverfahren aus einem hochwertigen Stahl, zum Beispiel CF45, hergestellt sein, und in das beispielsweise aus Aluminium bestehende Gehäuse 28 eingepresst werden, wobei je nach Bedarf zusätzlich noch Befestigungsschrauben, zum Beispiel 4 M6 Schrauben, vorgesehen sein können. Die Abdichtung zwischen dem Gehäuse 28 und der inneren Führung 24 erfolgt über den O-Ring 54, wobei zusätzlich beispielsweise ein Dichtliquid, zum Beispiel Locktite 510, zur Abdichtung vorgesehen sein kann. Der Kolben 20 und die Gabel 12 können beispielsweise, genauso wie die innere Führung 24, aus einem hochwertigen Stahl, zum Beispiel CF45, geschmiedet sein. Der weitere Nutring 52 kann als doppelseitiger Nutring ausgeführt sein, um den ersten Bereich 30 und den zweiten Bereich 32 des Druckraumes gegenseitig abzudichten. Es ist allerdings auch denkbar, zwei einseitig abdichtende in Gegenrichtung eingebaute Nutringe vorzusehen. Die Dichtung 60 ist als eine Einpressdichtung mit einem Stahleinlegeteil ausgeführt und in den Deckel 50 eingepresst, um die stabile Dichtheit des Druckraumes zu gewährleisten. Sie beansprucht dabei weniger Einbauraum als ein klassischer Nutring, der eine beidseitige Abstützung in einer Dichtungsnut voraussetzen würde, was allerdings ebenfalls vorgesehen sein kann.

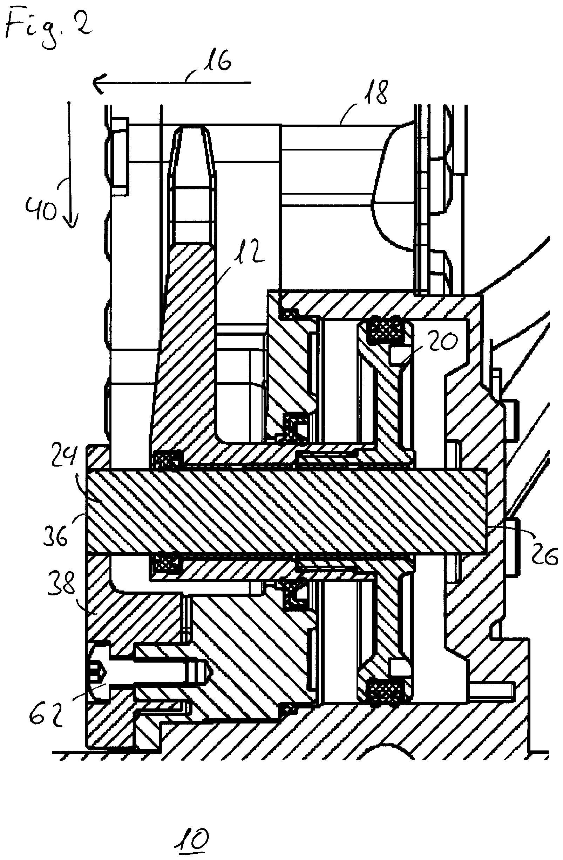

Figur 2 zeigt eine zweite Ausführungsform einer axialen Verschiebevorrichtung. Die in Figur 2 dargestellte Vorrichtung 10 unterscheidet sich insbesondere durch eine Abstützung 38, die ein dem Ende 26 gegenüberliegendes weiteres Ende 36 der inneren Führung 24 aufnimmt, wobei die Abstützung 38 die innere Führung 24 gegenüber dem Gehäuse 28 des Getriebes in einer radialen Richtung 40 gegenüber dem Deckel 50 festlegt. Die Abstützung 38 wird dabei über eine Fixierschraube 62 gegen eine Verschiebung in der radialen Richtung 40 fixiert. Die Abstützung 38 nimmt dabei einen Teil bei der Bewegung der Welle 18 in der axialen Richtung 16 entstehenden Querkräfte in der radialen Richtung 40 auf, so dass die innere Führung 24 weniger stark durchgebogen wird. Auf diese Weise wird der mögliche Hub des Kolbens 20 nicht durch ein Durchbiegen der inneren Führung 24 beschränkt, so dass insbesondere eine Beschränkung des Gesamtbewegungshubes der Welle 18 vermieden wird. Die Abstützung 38 kann beispielsweise aus einem hochwertigen Stahl gefertigt sein. Dabei kann ein geringes Lagerspiel in der radialen Richtung 40 vorgesehen werden. Weiterhin kann durch die Abstützung 38 an dem weiteren Ende 36 der inneren Führung 24 am gegenüberliegenden Ende 26 der inneren Führung 24 eine vereinfachte Fixierung der inneren Führung 24 gegenüber dem Gehäuse 28 realisiert sein. Beispielsweise kann die innere Führung 24 als Drehteil hergestellt sein und unter Ausnutzung der unterschiedlichen Temperaturausdehnungskoeffizienten der verschiedenen verwendeten Materialien bei einem großen Temperaturunterschied in das Gehäuse 28 mit Presspassung eingepasst werden.

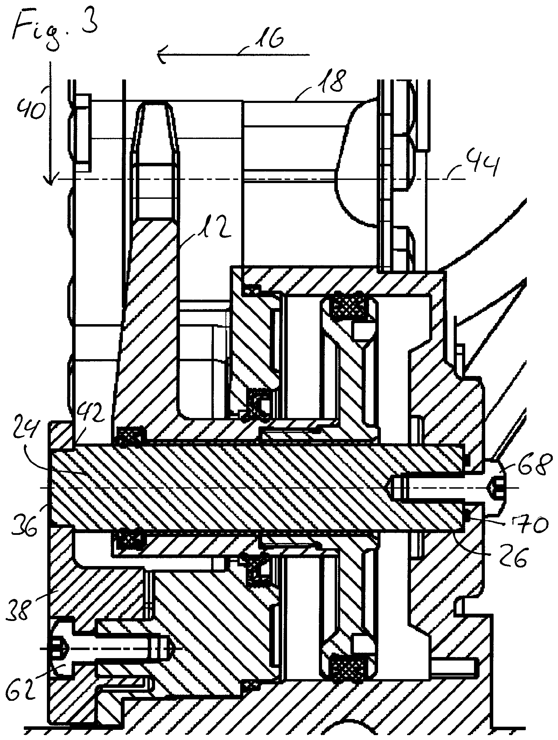

Figur 3 zeigt eine dritte Ausführungsform einer axialen Verschiebevorrichtung. Bei der in Figur 3 dargestellten Vorrichtung 10 ist die innere Führung 24 mit Hilfe einer Abstufung 42 gegenüber der Abstützung 38 in der axialen Richtung 16 festgelegt. Weiterhin ist eine weitere Fixierschraube 68 an dem gegenüberliegenden Ende 26 der inneren Führung 24 vorgesehen, die ebenfalls eine mögliche Belastung in axialer Richtung 16 aufnimmt. Ein weiterer O-Ring 70 ist dabei zur Abdichtung zwischen der inneren Führung 24 und dem Gehäuse 28 vorgesehen. Die weitere Fixierschraube 68 kann beispielsweise notwendig sein, falls das Einpressen der vereinfachten Fixierung der inneren Führung 24, wie sie im Zusammenhang mit Figur 2 beschrieben wurde, für die zu erwartenden Kräfte nicht ausreichend ist.

### Bezugszeichenliste

- 10: Vorrichtung
- 12: Gabel
- 16: axiale Richtung
- 18: Welle
- 20: Kolben
- 22: Kolbengehäuse
- 24: innere Führung
- 26: Ende
- 28: Gehäuse
- 30: erster Bereich
- 32: zweiter Bereich
- 34: Nutring
- 36: weiteres Ende
- 38: Abstützung
- 40: radiale Richtung
- 42: Abstufung
- 44: Wellenachse
- 46: Führungsachse
- 48: Achsenversatz
- 50: Deckel
- 52: weiterer Nutring
- 54: O-Ring
- 56: Verbindung
- 58: Laufbuchse
- 60: Dichtung
- 62: Fixierschraube
- 64: Druckluftleitung
- 66: weitere Druckluftleitung
- 68: weitere Fixierschraube
- 70: weiterer O-Ring

## Patentansprüche

1. Vorrichtung (10) zum axialen Verschieben einer Welle (18) in einem Fahrzeuggetriebe (14) in einem Getriebegehäuse (28), insbesondere einem Fahrzeuggetriebe (14) eines Nutzfahrzeugs, bei dem über eine Gabel (12) Kräfte in einer axialen Richtung (16) auf die Welle (18) des Fahrzeuggetriebes (14) ausgeübt werden,
- wobei die Vorrichtung (10) einen in der axialen Richtung (16) beweglichen Kolben (20) in einem Kolbengehäuse (22) umfasst,
- wobei der Kolben (20) auf einer inneren Führung (24) gelagert ist, und
- wobei ein Ende (26) der inneren Führung (24) auf einer Seite aus dem Kolbengehäuse (22) hinausragt,
**dadurch gekennzeichnet, dass** das Ende (26) direkt mit dem Getriebegehäuse (28) des Fahrzeuggetriebes (14) verbunden und gegenüber diesem festgelegt ist.

2. Vorrichtung (10) nach Anspruch 1, **dadurch gekennzeichnet, dass** der Kolben (20) einen im Inneren des Kolbengehäuses (22) vorgesehenen Druckraum in einen ersten Bereich (30) und einen zweiten Bereich (32) unterteilt.

3. Vorrichtung (10) nach Anspruch 1 oder 2, **dadurch gekennzeichnet, dass** an der inneren Führung (24) ein Nutring (34) zur Abdichtung des Druckraumes vorgesehen ist.

4. Vorrichtung (10) nach einem der vorhergehenden Ansprüche, **dadurch gekennzeichnet,**
- **dass** ein weiteres Ende (36) der inneren Führung (24) auf einer weiteren Seite des Kolbengehäuses (22) über das Kolbengehäuse (22) hinausragt, und
- **dass** eine Abstützung (38) vorgesehen ist, die das weitere Ende (36) aufnimmt und gegenüber dem Gehäuse (28) des Fahrzeuggetriebes (14) festlegt.

5. Vorrichtung (10) nach Anspruch 4, **dadurch gekennzeichnet, dass** die Abstützung (38) in einer radialen Richtung (40) ein Lagerspiel aufweist.

6. Vorrichtung (10) nach Anspruch 4 oder 5, **dadurch gekennzeichnet, dass** die innere Führung (24) gegenüber der Abstützung (38) eine Abstufung (42) aufweist.

7. Vorrichtung (10) nach einem der vorhergehenden Ansprüche, **dadurch gekennzeichnet, dass** die innere Führung (24) als eine zentrale Führung ausgeführt ist.

## Claims

1. Device (10) for axially displacing a shaft (18) in a vehicle transmission (14) in a transmission housing (28), in particular a vehicle transmission (14) of a utility vehicle, in which forces are exerted on the shaft (18) of the vehicle transmission (14) in an axial direction (16) via a fork (12),
- wherein the device (10) comprises a piston (20) movable in the axial direction (16) in a piston housing (22),
- wherein the piston (20) is mounted on an inner guide (24), and
- wherein an end (26) of the inner guide (24) protrudes from the piston housing (22) on one side,
**characterized in that** the end (26) is directly connected to and fixed in relation to the transmission housing (28) of the vehicle transmission (14).

2. Device (10) according to Claim 1, **characterized in that** the piston (20) divides a pressure chamber provided in the interior of the piston housing (22) into a first region (30) and a second region (32).

3. Device (10) according to Claim 1 or 2, **characterized in that** on the inner guide (24) is provided a groove ring (34) to seal the pressure chamber.

4. Device (10) according to any of the preceding claims, **characterized in that**
- a further end (36) of the inner guide (24) protrudes beyond the piston housing (22) on a further side of the piston housing (22), and
- a support (38) is provided which receives the further end (36) and fixes this in relation to the housing (28) of the vehicle transmission (14).

5. Device (10) according to Claim 4, **characterized in that** the support (38) has a bearing play in a radial direction (40).

6. Device (10) according to Claim 4 or 5, **characterized in that** the inner guide (24) has a step (42) against the support (38).

7. Device (10) according to any of the preceding claims, **characterized in that** the inner guide (24) is formed as a central guide.

## Revendications

1. Dispositif (10) de déplacement axial d'un arbre (18) d'une boîte de vitesse (14) dans un carter (28) de boîte de vitesse,
notamment d'une boîte de vitesse (14) d'un véhicule utilitaire, dans lequel, par une fourche (12), des forces sont appliquées dans un direction (16) axiale à l'arbre (18) de la boîte de vitesse (14) du véhicule,
- dans lequel le dispositif (10) comprend un piston (20) mobile dans la direction (16) axiale dans une enveloppe (22) de piston,
- dans lequel le piston (20) est monté sur un guidage (24) intérieur et
- dans lequel une extrémité (26) du guidage (24) intérieur dépasse d'un côté de l'enveloppe (22) du piston,
**caractérisé en ce que** l'extrémité (26) est reliée directement au carter (28) de la boîte de vitesse (14) du véhicule et est fixée par rapport à celui-ci.

2. Dispositif (10) suivant la revendication 1, **caractérisé en ce que** le piston (20) subdivise un espace sous pression, prévu à l'intérieur de l'enveloppe (22) du piston, en une première partie (30) et en une deuxième partie (32).

3. Dispositif (10) suivant la revendication 1 ou 2, **caractérisé en ce que**, sur le guidage (24) intérieur, est prévue une bague (34) rainurée pour rendre étanche l'espace sous pression.

4. Dispositif (10) suivant l'une des revendications précédentes, **caractérisé**
- **en ce qu'**une autre extrémité (36) du guidage (24) intérieur dépasse de l'enveloppe (22) du piston, d'un autre côté de l'enveloppe (22) du piston et
- **en ce qu'**il est prévu un appui (38), qui reçoit l'autre extrémité (36) et la fixe par rapport au carter (28) de la boîte de vitesse (14) du véhicule.

5. Dispositif (10) suivant la revendication 4, **caractérisé en ce que** l'appui (38) a un jeu de palier dans une direction (40) radiale.

6. Dispositif (10) suivant la revendication 4 ou 5, **caractérisé en ce que** le guidage (24) intérieur a un gradin (42) par rapport à l'appui (38).

7. Dispositif (10) suivant l'une des revendications précédentes, **caractérisé en ce que** le guidage (24) intérieur est réalisé sous la forme d'un guidage central.
